# EUROPEAN PATENT SPECIFICATION

(11) **EP 3 145 318 B1**
(45) Date of publication and mention of the grant of the patent: **13.05.2020**
(21) Application number: 15728967.9
(22) Date of filing: 20.05.2015
(51) Int. Cl.: A23G 4/02

(54) **HIGHLY EFFICIENT DUST COATING METHOD TO IMPROVE PROCESS AND PACKAGING**
HOCHEFFIZIENTE STAUBBESCHICHTUNGSVERFAHREN ZUM VERBESSERN DES PROZESSES UND VERPACKUNG
PROCÉDÉ DE DÉPOUSSIÉRAGE HAUTEMENT EFFICACE POUR AMÉLIORER LE PROCÉDÉ ET L'EMBALLAGE

(30) Priority: 20.05.2014 US 201462000652 P
(43) Date of publication of application: 29.03.2017
(73) Proprietor: Intercontinental Great Brands LLC, East Hanover, NJ 07936 (US)
(72) Inventor: MECRIN, Eric, Whippany New Jersey 07981 (US); ELEJALDE, Cesar Carlos, Whippany New Jersey 07981 (US); DEGADY, Marc, Whippany New Jersey 07981 (US); GABLER, Tilo, Whippany New Jersey 07981 (US); BUCK, Ann E., East Hanover, NJ 07936 (US); JANI, Bharat, Whippany New Jersey 07981 (US); SCAROLA, Leonard, Whippany New Jersey 07981 (US)
(74) Representative: Boult Wade Tennant LLP
(86) International application number: PCT/US2015/031742
(87) International publication number: WO 2015/179498

(56) References cited:
- FR-A2- 2 350 146
- GB-A- 746 101
- JP-A- S62 224 275
- JP-B2- 2 909 956
- US-A1- 2006 147 585
- US-A1- 2008 166 477

## Description

### FIELD OF THE INVENTION

The present invention relates to a method for applying a powder dusting material within a comestible manufacturing system.

### BACKGROUND OF THE INVENTION

Typically, the process of making and packaging comestibles, such as a confection or chewing gum, is time-consuming and involves a significant amount of machinery. For example, the process of making and packing gum products can include mixing and producing a finished gum as a non-uniform output, extruding and forming the finished gum into loaves, conditioning the loaves of the finished gum, extruding the loaves into a continuous thin sheet of the finished gum, rolling the continuous sheet through a series of rollers to a uniform reduced thickness, scoring and dividing sheets into individual scored sheets, conditioning the individual sheets in a conditioning room, dividing sheets into gum pieces, and packaging the gum pieces. Such processes of making and packaging gum products are disclosed in U.S. Patent No. 6,254,373 and U.S. Patent Application No. 15/352,110.

During the process of making and packaging comestibles, a powdered dusting material is commonly applied as an anti-sticking agent to prevent undesirable adhering of the comestible to the manufacturing components and to itself. Conventional processes for applying powdered dusting material are inefficient and require a dusting apparatus that applies a surplus of powdered dusting material to the comestible and then a collection apparatus configured to remove the excess of powdered dusting material. Because the powdered dusting material is not contained when applied, the material becomes airborne, posing health and safety concerns for nearby employees. In addition, the powdered dusting material may accumulate over time, resulting in a buildup on either the product or the components of the manufacturing system.

The present invention is directed toward improvements and advancements over such prior systems.

### BRIEF SUMMARY OF THE INVENTION

According to one embodiment of the invention, a method of forming a comestible is provided including transporting the comestible to a dusting apparatus having an enclosed chamber. A dusting agent within the enclosed chamber is directed onto one or more surfaces of the comestible as the comestible passes through the enclosed chamber.

According to another embodiment of the invention, a method of forming a comestible is provided including forming a comestible mass into the comestible at a forming station including two or more pairs of rollers. A dusting agent within an enclosed chamber of a dusting apparatus is directed onto one or more surfaces of the comestible as the comestible passes through the enclosed chamber. The dusting apparatus is arranged generally upstream of a first pair of the two or more pairs of rollers.

### BRIEF DESCRIPTION OF THE DRAWINGS

The accompanying drawings incorporated in and forming a part of the specification embodies several aspects of the present invention and, together with the description, serves to explain the principles of the invention. In the drawings:
FIG. 1 is a schematic diagram of a comestible manufacturing system including a dusting apparatus according to an embodiment of the invention;
FIG. 2a is a schematic diagram of another a comestible manufacturing system including a dusting apparatus according to an embodiment of the invention;
FIG. 2b is a schematic diagram of another a comestible manufacturing system including a dusting apparatus according to an embodiment of the invention;
FIG. 3 is a cross-sectional view of a dusting apparatus according to an embodiment of the invention; and
FIG. 4 a cross-sectional view of a dusting apparatus according to another embodiment of the invention.

### DETAILED DESCRIPTION OF THE INVENTION

The following disclosure will detail particular embodiments according to the present disclosure, which provide improvements for preventing a comestible material from sticking to one or more forming components (e.g. sizing components, cutting components, scoring components, etc.) or to itself during the manufacturing thereof. In one embodiment, a system includes a set or pair of rollers for forming a comestible structure/mass into a continuous web or sheet having a desired thickness and a width, while imparting temperature control to the comestible at the same time. Rollers such as but not limited those described in United States Application No. 61/522,767, are contemplated herein. Moving walls such as the moving walls described in United States Application No. 61/510,119, are also contemplated.

The comestible included in the comestible mass and sheet discussed herein include any type of edible product, including but not limited to chewing gum (at any stage including elastomer, partially finished base, finished chewing gum base, and finished chewing gum), confection (which may be synonymous with chewing gum and candy), sweet and savory biscuits and cakes, nuts, and grains. For ease of description, the comestible will be referred as chewing gum for the remainder of the description. Certain compositions of chewing gum may have a non-uniform texture and/or a multi-layered composition.

Referring now to the FIGS. exemplary systems for forming a chewing gum are illustrated. The comestible manufacturing systems 10 generally include a comestible mixing station 20 and a comestible forming or sizing station 30 that includes at least one pair of rollers 40. The system 10 may additionally include a further smoothing roller 80 located downstream from the comestible sizing station 30 and a scoring roller 85 and cutting roller 90, as illustrated in the FIGS. The manufacturing systems 10 includes a dusting station 120 arranged generally upstream or downstream form the sizing station 30.

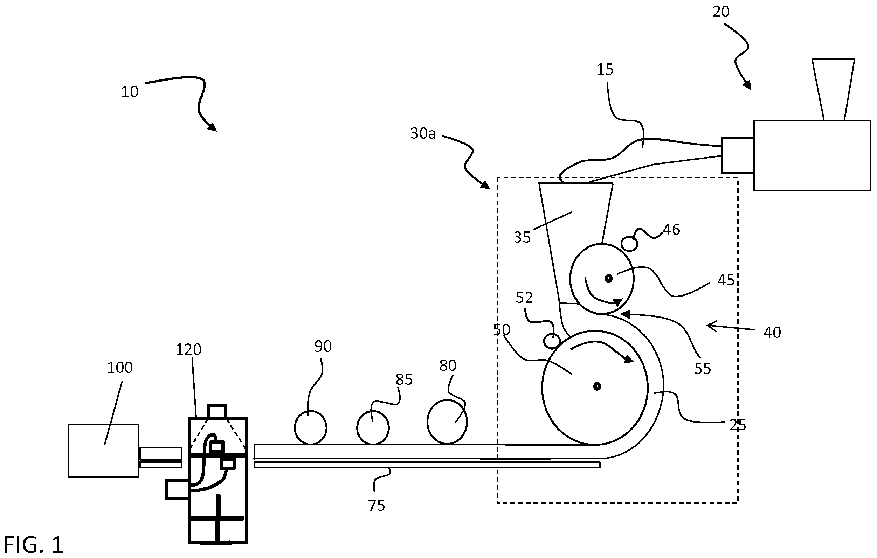

In the manufacturing system 10 illustrated in FIG. 1, the comestible forming station 30a includes a hopper 35 arranged at an upstream entry point thereof. The forming station 30a additionally includes a pair of rollers 40, which in this embodiment include an upper roller 45 and a lower roller 50. The rollers 45, 50 are externally driven, for example by an operably coupled motor (not shown). In an exemplary embodiment, each of the rollers 45, 50 is provided with a motor, such that the rotational speed of each of the rollers 45, 50 can be controlled independently.

The hopper 35 is disposed proximate the rollers 40, and may be used for upstream surge control, capacity and feed control. The hopper 35 constrains, accumulates, and feeds a comestible mass 15 supplied from the mixing station 20 into an inlet or gap region 55 generally between the pair of rollers 40.

The comestible mass 15 moves through the hopper 35, such as via gravity or with the assistance of guide rollers (not shown) disposed within the hopper 35. In the exemplary embodiment of Figure 1, as the comestible mass 15 exits the hopper it is guided by the lower roller 50 toward the upper roller 45 and the gap 55 between the upper and lower rollers 45, 50. The counter rotating upper roller 45 and lower roller 50 pull the comestible mass 15 through the gap 55 between the pair of rollers 40 (also referred to as "forming rollers" or "sizing rollers" herein) to form and size the comestible mass 15 into a comestible sheet 25.

In one embodiment, the upper roller 45 is equipped with an oiling roller 46 configured to lubricate the upper roller 45 with a food quality vegetable or mineral oil which acts as a release agent to prevent sticking. Similarly, the lower roller 50 may be equipped with an oiling roller 52 configured to lubricate the lower roller 50. Although each of the rollers 45, 50 is provided with an oiling roller 46, 52 in the illustrated, non-limiting embodiment, in other embodiments, only one of the upper and lower rollers 45, 50 may be provided with an oiling roller 46, 52 when the rollers 45, 50 have a sufficiently low surface tension to release the comestible mass 15 without aid of a releasing agent and the comestible mass 15 is sufficiently not tacky for subsequent scoring, cutting, and packaging processes. In addition, other lubricating systems, such as a spray bar or a dipping basin (not shown) can be used to apply a suitable liquid lubricator.

Upon exiting the gap 55 of the pair of rollers 40, the conveyor 75 moves the comestible sheet 25 having a final or substantially final thickness (of between about 0.3 mm to 10 mm for some sheet or slab forming systems) towards the smoothing roller 80, which is used to remove surface imperfections, kinks, and may further reduce the thickness of the comestible sheet 25.

In the exemplary embodiment of FIG. 1, the system 10 further includes a scoring roller 85 and a lateral dividing or cutting roller 90 downstream of the comestible forming station 30a. The scoring roller 85 and the lateral dividing roller 90 score and divide the comestible sheet 25 into individual scored sheets. The scored sheets may then be conveyed to an optional cooling tunnel 100 where the scored sheets are cooled from both top and bottom sides with forced air. As the scored sheets are further conditioned in the cooling tunnel, the gum material of the scored sheets stiffens sufficiently for stacking so as to maintain shape and to minimize material creep. Thereafter, the comestible may be transported to further processing and packaging equipment for producing packaged comestible products, perhaps in a single line with the system 10.

The smoothing roller 80, scoring roller 85, and dividing roller 90, as well as their equivalents, are considered to be forming or manufacturing instruments within the forming system 10. In some embodiments, in addition to or in place of the scoring roller 85 and the dividing roller 90, the system 10 may include other comestible shaping solutions, such as a drop-roller, a die cutter, pelletizer or other similar comestible shaping equipment (provided the sheet is cooled to a sufficient extent). As such, the comestible manufacturing system 10 can produce a comestible having various final shapes which can subsequently be packaged, or pellets that are subsequently coated.

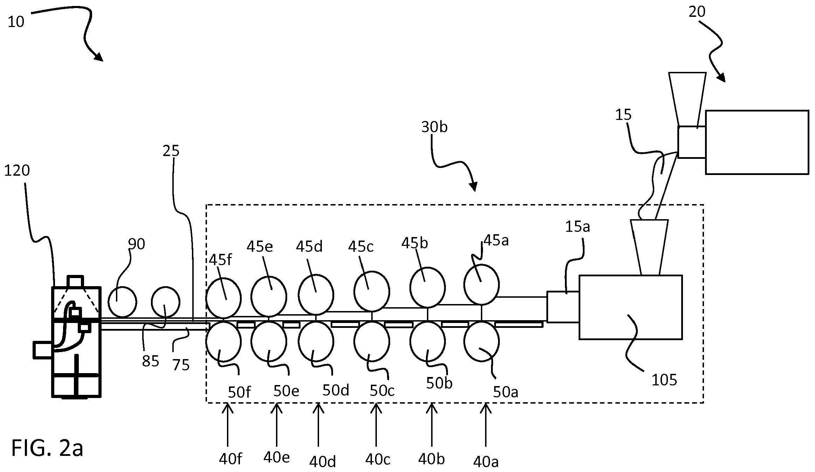

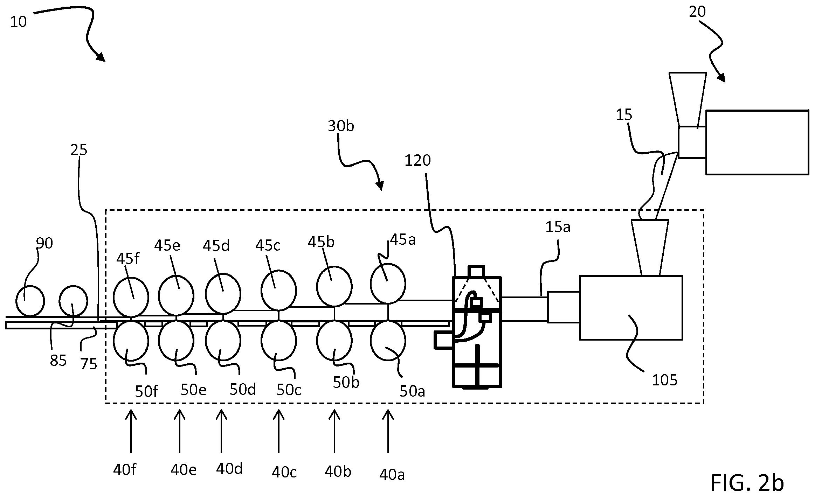

In another embodiment of the manufacturing system 10, illustrated in FIGS. 2a and 2b, a comestible forming station 30b is shown and includes a sizing type extruder 105 and a plurality of pairs of sizing rollers 40. The sizing type extruder 105 is a low shear extruder configured to force the comestible mass 15 supplied from the mixing station 20 through a forming die (not shown) having a defined width orifice, thereby forming a generally uniform extrusion 15a that may be a continuous stream of a substantially uniform size, or alternatively, may be periodically cut into separate shaped pieces of comestible mass 15. In the illustrated, non-limiting embodiments, the plurality of sizing rollers 40 are generally arranged in pairs, such as six pairs 40a - 40f for example; each pair 40 includes an upper roller 45 and a lower roller 50 as illustrated in the FIG. In such embodiments, the upper and lower roller 45, 50 of each pair 40 include rotational axes that are vertically offset to facilitate the creation of a gap (not shown) there between. The plurality of pairs of sizing rollers 40 are arranged generally in sequence over gaps or openings in a conveyor 75, such that the shaped comestible mass 15a formed by the sizing type extruder 105 passes through each of the plurality of sizing rollers 40 consecutively. The distance or gap between each consecutive pair of rollers 40 may be substantially identical, or alternatively may generally decrease so as to progressively reduce the thickness of the shaped comestible mass 15a.

Each pair of rollers 40 is configured to compress or deform and elongate the shaped comestible mass 15a as it passes between the upper and lower rollers 45, 50 to provide a generally uniform thickness. The comestible sheet 25 having a generally uniform thickness 65 may subsequently expand or shrink in its thickness depending on a formulation of the comestible. Further, after passing through the series of rollers 40, the comestible sheet 25 having a generally uniform thickness may subsequently be shaped, textured, and/or printed, which may alter the generally uniform thickness.

The rollers 40 of either embodiment of the comestible forming station 30a or 30b may be configured to have a smooth surface finish. In addition, the rollers 40 may also be configured with any desirable actuation device (not shown), such as but not limited to a servomechanism that controls the vertical position of the rollers 45, 50 within each roller pair 40 relative to each other and thereby adjusts the gap 55 there between.

It should be appreciated that although the system 10 is shown as a continuous line in FIGS. 1 and 2, in other embodiments, one or more of these components of the comestible manufacturing system 10 may be located in different parts of a manufacturing plant or even in a different manufacturing plant. For example, in one embodiment, the comestible mixing system 20 is located in one plant, and the comestible forming system 30 and other subsequent components, such as the scoring and dividing rollers and packaging components, are located in a different plant, wherein the mixed comestible mass 15 transferred from one plant to the other for subsequent processes.

In the illustrated, embodiments shown in the FIGS., the gum manufacturing system 10 additionally includes a dusting apparatus 120, which is configured to distribute a powdered dusting agent over at least one surface of the comestible structure 15, 15a, 25. The dusting agent acts as an anti-sticking agent to prevent the comestible structure 15, 15a, 25 from sticking to one or more components of the system 10 or itself during manufacture thereof. The powdered dusting agent may also be applied to the comestible structure 15, 15a, 25 to impart additional characteristics, such as coloring or flavor thereto. Exemplary powdered dusting agents, include those known in the confectionery art, such as powdered saccharides, powdered sugar alcohols, talc, silicon dioxide, calcium carbonate, or a combination thereof for example.

The dusting apparatus 120 may be used with the forming stations such as but not limited to forming station 30a, as shown in FIG. 1, and forming station 30b, as shown in FIGS. 2a and 2b. As illustrated in FIGS. 1 and 2a, the dusting apparatus 120 maybe located generally downstream from the forming station 30, such as after the cooling of the comestible structure 15a, 25, upstream from a packaging station 100 for example. In another embodiment, illustrated in FIG. 2b, the dusting apparatus 120 is arranged integrally with the forming station 30b, such as between the sizing type extruder 105 and the first pair of rollers 40a for example. However, the dusting apparatus 120 may be arranged at any position within the manufacturing system 10, including upstream from the forming station 30. More specifically, examples of where the dusting apparatus 120 may be positioned within the manufacturing system 10 include, but are not limited to between the mixing station 20 and the forming station 30, integral with the forming station 30, between the forming station 30 and any of the smoothing, scoring, and cutting rollers 80, 85, 90, between the scoring and cutting rollers 85, 90 and the cooling tunnel 100, and after the cooling tunnel 100 before a packaging machine (not shown).

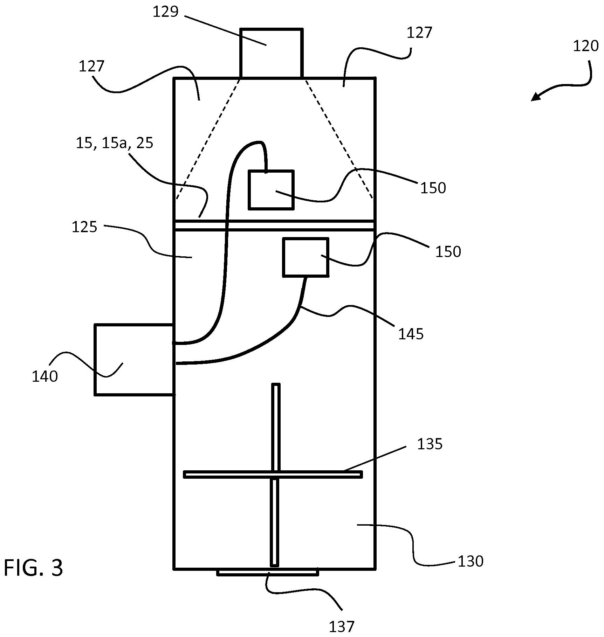

As illustrated in more detail in FIG. 3, the dusting apparatus 120 includes an enclosed chamber 125 having a reservoir 130 at least partially filled with the powdered, non-charged dusting agent. In one embodiment, a load cell 137 is configured to measure the amount of dusting agent within the reservoir 130. The enclosed chamber 125 is partially defined by at least one negative pressure area 127 configured to provide forcible control of the ambient air to prevent ejection of the dusting agent, such as generated by a vacuum 129 for example. An agitator 135 arranged within the reservoir 130 is configured to rotate to send a portion of the dusting agent airborne within the chamber 125. The speed of rotation of the agitator 135 may be used to control the concentration of dusting agent supplied to the chamber 125.

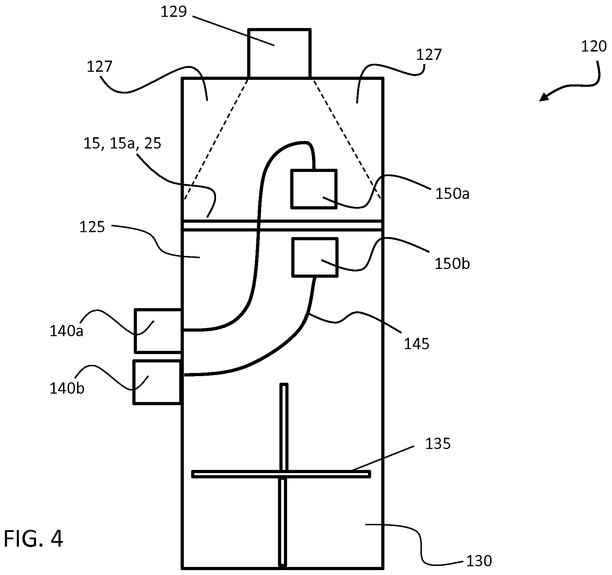

During operation of the dusting apparatus 120, a fan or blower 140 continuously draws dusting agent from within the chamber 125, and supplies a mixture of the dusting agent and air through one or more flexible hoses 145 to at least one movable nozzle 150 positioned adjacent the comestible structure 15, 15a, 25 within the chamber 125. The air and dusting agent is directed by each nozzle 150 toward a nearby non-charged surface of the comestible structure 15, 15a, 25. In one embodiment, illustrated in FIG. 4, the apparatus includes a first blower 140a operably coupled to at least a first nozzle 150a arranged adjacent a first side of the comestible structure 15, 15a, 25 and a second blower 140b operably coupled to at least a second nozzle 150b arranged adjacent a second side of the comestible structure 15, 15a, 25. The first surface and the second surface of the comestible structure 15, 15a, 25 may, but need not be opposite surfaces. In addition, the first blower 140a and the second blower 140b may be configured to expel the dusting agent from the first nozzles 150a and the second nozzles 150b at different velocities.

The comestible structure 15, 15a, 25 is configured to travel through the chamber 125 of the dusting apparatus 120, such as on a conveyor or other transport device (not shown) for example. As the comestible structure 15, 15a, 25 passes through the chamber 125, dusting agent drawn from the chamber 125 is provided to and expelled from the at least one nozzle 150 such that at least a portion of the expelled dusting agent contacts and adheres to the one or more exposed surfaces of the comestible structure 15, 15a, 25. The portion of the expelled dusting agent that does not adhere to the comestible structure 15, 15a, 25 is configured to fall within the chamber 125 such that the dusting agent is either returned to the reservoir 130 or repeatedly drawn in by the one or more blowers 140. The comestible structure 15, 15a, 25 provided at an exit of the dusting apparatus 120 includes at least one surface having a substantially uniform layer of dusting agent formed thereon. The thickness of the layer of dusting agent may be controlled by adjusting the amount of dusting agent circulating within the chamber 125, such as by controlling the rotational speed of the agitator 135, and also by adjusting the velocity at which the comestible structure 15, 15a, 25 travels through the chamber 125.

By using the dusting apparatus 120 to apply the powdered dusting agent, an evenly distributed layer of dusting agent is formed on the comestible structure 15, 15a, 25. The overall thickness of the layer of dusting agent applied to the comestible structure 15, 15a, 25 may be selected based on the type of forming station 30 included in the system 10 and the position of the dusting apparatus 120 relative to the forming station 30. For example, when the dusting apparatus 120 is arranged generally downstream from the forming station 30, as illustrated in FIG. 1, the amount of dusting agent that the dusting apparatus 120 applies to the comestible structure 25 is generally less than the amount of dusting agent required to prevent the comestible 15, 15a from sticking to one or more components or to itself during a forming operation. As a result, the dusting apparatus 120 may be particularly suited for downstream use in a manufacturing system 10 including forming station 30a where an anti-sticking agent, particularly a powdered release agent, is not necessary to prevent the comestible structure 15, 15a, from sticking to the pair of rollers 40. In such embodiments, it is notable that an oil or other liquid lubricant is applied to the rollers 45, 50 of the forming station 30a to prevent sticking of the comestible structure 15, and that the layer of powdered dusting agent is applied to one or more surfaces of the comestible structure 25 after the forming and sizing thereof.

In embodiments where the dusting apparatus 120 is positioned upstream from or integral with the forming station 30, such as illustrated in FIG. 2b, the dusting apparatus 120 may be configured to apply more powdered dusting agent to the comestible structure 15, 15a than in embodiments where the dusting apparatus 120 is positioned generally downstream from the forming station 30. The dusting apparatus 120 may provide particular advantages when positioned upstream from or integral with a forming station, such as forming station 30b for example, where inclusion of an anti-sticking agent, particularly a powdered release agent, is generally beneficial to prevent the comestible structure 15, 15a from sticking to any of the pairs of rollers 40 or other downstream components.

Because the dusting agent is contained within the chamber 125, the health and safety risks associated with the dusting apparatus 120, such as the potential for ingestion of the dusting agent for example, are significantly reduced. In addition, the dusting apparatus 120 is more efficient than conventional dusting means, because dust collection equipment located at another point in the system 10 is not required to actively remove excess dusting agent from the surface of the comestible structure. In addition, the comestible structure having a final cross-sectional size, shape, and finish, may be packaged at a packaging station (not shown), without actively removing dusting agent from the at least one surface of the comestible structure downstream of the dusting apparatus 120.

## Claims

1. A method of forming a comestible, comprising:
transporting the comestible to a dusting apparatus having an enclosed chamber; and
directing a dusting agent within said enclosed chamber onto one or more surfaces of the comestible as the comestible passes through said enclosed chamber, wherein a reservoir of said dusting agent is located within said enclosed chamber, and
wherein said dusting agent is circulating within said enclosed chamber, and
wherein an agitator is arranged within the reservoir and is configured to rotate to send a portion of the dusting agent airborne within the chamber.

2. The method according to claim 1, wherein said directing includes expelling dusting agent at said one or more surfaces via at least one nozzle.

3. The method according to claim 2, wherein a blower operably coupled to said at least one nozzle is configured to supply dusting agent circulating within the chamber to the at least one nozzle.

4. The method according to claim 1, wherein said dusting agent forms a uniformly distributed layer over said one or more surfaces of the comestible.

5. The method according to claim 4, wherein excess dusting agent is not actively removed from said one or more surfaces after formation of said layer.

6. The method according to claim 4, wherein a thickness of said layer of dusting agent is controllable by adjusting at least one of a velocity at which the comestible passes through said enclosed chamber and an amount of dusting agent within said enclosed chamber.

7. The method according to claim 1, wherein a portion of said expelled dusting agent is recirculated within said enclosed chamber.

8. The method according to claim 1, wherein the comestible is a continuous chewing gum sheet having a uniform or non-uniform thickness.

9. The method of claim 1, further comprising:
forming a comestible mass into the comestible at a forming station including two or more pairs of rollers,
wherein said dusting apparatus is arranged generally upstream of a first pair of said two or more pairs of rollers.

10. The method according to claim 9, wherein said forming station further includes an extruder arranged upstream of said first pair of said two or more pairs of rollers, said dusting apparatus being between said extruder and said first pair of said two or more pairs of rollers.

## Patentansprüche

1. Verfahren zum Formen einer Essware, umfassend:
Transportieren der Essware zu einer Bestäubungsvorrichtung mit einer geschlossenen Kammer; und
Leiten eines Staubmittels in der geschlossenen Kammer auf eine oder mehrere Oberflächen der Essware, wenn die Essware durch die geschlossene Kammer hindurchtritt, wobei ein Vorratsbehälter des Staubmittels in der geschlossenen Kammer angeordnet ist; und
wobei das Staubmittel in der geschlossenen Kammer zirkuliert, und
wobei ein Rührwerk in dem Vorratsbehälter angeordnet ist und so konfiguriert ist, dass es sich dreht, um einen Teil des Staubmittels in die Luft zu befördern.

2. Verfahren nach Anspruch 1, wobei das Richten das Ausstoßen eines Staubmittels an der einen oder den mehreren Oberflächen über mindestens eine Düse umfasst.

3. Verfahren nach Anspruch 2, wobei ein Gebläse, das funktionsfähig mit der mindestens einen Düse gekoppelt ist, konfiguriert ist, um der mindestens einen Düse in der Kammer zirkulierendes Staubmittel zuzuführen.

4. Verfahren nach Anspruch 1, wobei das Staubmittel eine gleichmäßig verteilte Schicht über der einen oder den mehreren Oberflächen der Essware bildet.

5. Verfahren nach Anspruch 4, wobei überschüssiges Staubmittel nach der Bildung der Schicht nicht aktiv von der einen oder den mehreren Oberflächen entfernt wird.

6. Verfahren nach Anspruch 4, wobei eine Dicke der Schicht von Staubmittel durch Anpassen mindestens eines von einer Geschwindigkeit, mit der die Essware durch die geschlossene Kammer läuft, und einer Menge an Staubmittel in der geschlossenen Kammer steuerbar ist.

7. Verfahren nach Anspruch 1, wobei ein Teil des ausgestoßenen Staubmittels in der geschlossenen Kammer rezirkuliert wird.

8. Verfahren nach Anspruch 1, wobei die Essware eine kontinuierliche Kaugummilage mit einer einheitlichen oder nicht einheitlichen Dicke ist.

9. Verfahren nach Anspruch 1, ferner umfassend:
Formen einer essbaren Masse zu der Essware in einer Formungsstation einschließend zwei oder mehr Walzenpaare,
wobei die Staubvorrichtung im Allgemeinen stromaufwärts von einem ersten Paar der zwei oder mehr Walzenpaare angeordnet ist.

10. Verfahren nach Anspruch 9, wobei die Formungsstation ferner einen Extruder einschließt, der stromaufwärts des ersten Paares der zwei oder mehr Walzenpaare angeordnet ist, wobei sich die Bestäubungsvorrichtung zwischen dem Extruder und dem ersten Paar der zwei oder mehr Walzenpaare befindet.

## Revendications

1. Procédé de formation d'un produit comestible, comprenant :
le transport du produit comestible vers un appareil de saupoudrage ayant une chambre close ; et
l'acheminement d'un agent de saupoudrage au sein de ladite chambre close sur une ou plusieurs surfaces du produit comestible à mesure que le produit comestible traverse ladite chambre close, dans lequel un réservoir dudit agent de saupoudrage est situé à l'intérieur de ladite chambre close, et
dans lequel ledit agent de saupoudrage est en circulation à l'intérieur de ladite chambre close, et
dans lequel un agitateur est agencé à l'intérieur du réservoir et est configuré pour tourner pour envoyer une partie de l'agent de saupoudrage en suspension dans l'air à l'intérieur de la chambre.

2. Procédé selon la revendication 1, dans lequel ledit acheminement inclut l'expulsion de l'agent de saupoudrage au niveau de ladite ou desdites surfaces via au moins une buse.

3. Procédé selon la revendication 2, dans lequel une soufflante couplée fonctionnellement à ladite au moins une buse est configurée pour alimenter un agent de saupoudrage en circulation à l'intérieur de la chambre vers l'au moins une buse.

4. Procédé selon la revendication 1, dans lequel ledit agent de saupoudrage forme une couche uniformément répartie par-dessus ladite ou lesdites surfaces du produit comestible.

5. Procédé selon la revendication 4, dans lequel l'agent de saupoudrage en excès n'est pas activement éliminé de ladite ou desdites surfaces après formation de ladite couche.

6. Procédé selon la revendication 4, dans lequel une épaisseur de ladite couche d'agent de saupoudrage est réglable en ajustant au moins l'une parmi une vitesse à laquelle le produit comestible traverse ladite chambre close et une quantité d'agent de saupoudrage à l'intérieur de ladite chambre close.

7. Procédé selon la revendication 1, dans lequel une partie dudit agent de saupoudrage expulsé est remise en circulation à l'intérieur de ladite chambre close.

8. Procédé selon la revendication 1, dans lequel le produit comestible est une feuille continue de chewing-gum ayant une épaisseur uniforme ou non uniforme.

9. Procédé selon la revendication 1, comprenant en outre :
la formation d'une masse comestible dans le produit comestible au niveau d'un poste de formage incluant deux paires ou plus de rouleaux,
dans lequel ledit appareil de saupoudrage est agencé généralement en amont d'une première paire parmi lesdites deux paires ou plus de rouleaux.

10. Procédé selon la revendication 9, dans lequel ledit poste de formage inclut en outre une extrudeuse agencée en amont de ladite première paire parmi lesdites deux paires ou plus de rouleaux, ledit appareil de saupoudrage étant entre ladite extrudeuse et ladite première paire parmi lesdites deux paires ou plus de rouleaux.
